# EUROPEAN PATENT APPLICATION

(11) **EP 3 209 085 A1**
(43) Date of publication of application: **23.08.2017**
(21) Application number: 15877469.5
(22) Date of filing: 17.01.2015
(51) Int. Cl.: H04W 76/02, H04W 88/02

(54) **CALL SETUP METHOD AND SYSTEM AND USER EQUIPMENT**

(71) Applicant: Huawei Technologies Co., Ltd., Longgang District Shenzhen, Guangdong 518129 (CN)
(72) Inventor: YANG, Yanmei, Shenzhen Guangdong 518129 (CN)
(74) Representative: Gill Jennings & Every LLP
(86) International application number: PCT/CN2015/070952
(87) International publication number: WO 2016/112551

(57) **Abstract**

The present invention discloses a call establishment method and system, and user equipment. First UE broadcasts a call establishment message, where the call establishment message includes an identifier of the first UE and a called party identifier, and the called party identifier is used to indicate a group or UE called by the first UE; receives a first call response message sent by second UE, where the first call response message includes an identifier of the second UE, and the first call response message is sent to the first UE by the second UE according to the called party identifier included in the received call establishment message; and establishes, according to the received first call response message, a call connection to the second UE corresponding to the identifier of the second UE. In this way, any UE broadcasts a call establishment message in an offline state, and establishes, in a point-to-point manner, a call connection to another UE sending a call response. Therefore, this effectively improves a fixed call establishment manner in a DMO scenario, and improves flexibility of group call establishment in an offline case.

## Description

### TECHNICAL FIELD

The present invention relates to the field of wireless communications technologies, and in particular, to a call establishment method and system, and user equipment.

### BACKGROUND

Mobile communication is one of fastest developing, widest applied, and most technically cutting-edge communications fields. Development of mobile communications technologies facilitates development of mobile communications services. However, a mobile communications system that people usually refer to is generally a public cellular mobile communications system. Among existing mobile communications systems, one mobile communications system, that is, a digital trunked mobile communications system, is used as a supplement to the public cellular mobile communications system. The digital trunked mobile communications system is mainly used for performing a special dedicated mobile communications service, for example, a traffic scheduling system or a civil aviation scheduling system.

There is a service in the digital integrated mobile communications system, that is, a direct mode operation (English: Direct Mode Operation; abbreviation: DMO) service. The DMO service is to establish a group call among different user equipments (English: user equipment; abbreviation: UE) without the involvement of a trunked system, and is, for example, a mission-critical push-to-talk service (English: the Mission Critical Push To Talk; abbreviation: MCPTT) that is proposed in a Long Term Evolution (English: Long Term Evolution; abbreviation: LTE) communications network architecture.

Specifically, there is a DMO group (English: group) scenario among MCPTT applications. In the group scenario, UE randomly sends a group message in a broadcast mode. No session (English: Session) is established yet among different UEs. Before broadcasting a group message, each UE does not know which UEs may receive the group message. After the group message is broadcast, it is also unclear whether any UE receives the group message. Therefore, establishment of a group call among different UEs cannot be ensured.

Further, on the basis of the group scenario, direct mode operation-relay (English: Direct Mode Operation-relay; abbreviation: DMO-R) is further proposed. In the DMO-R, a call is established between first UE that is offline in a group and second UE in the group by means of relay UE. However, in an actual application, the relay UE cannot ensure that all UEs in an offline case in the group can establish a call with the relay UE. For example, a call may fail to be established between the relay UE and UE that is relatively far away from the relay UE, and as a result, a group call fails to be established in the group.

Therefore, there is an urgent need for a call establishment method that is used to resolve a problem of establishing a group call among multiple UEs in an offline case.

### SUMMARY

In view of this, embodiments of the present invention provide a call establishment method and system, and user equipment, to resolve a problem of establishing a group call among multiple UEs in an offline case.

According to a first aspect, a call establishment method is provided, including:
broadcasting, by first user equipment UE, a call establishment message, where the call establishment message includes an identifier of the first UE and a called party identifier, and the called party identifier is used to indicate a group or UE called by the first UE;
receiving, by the first UE, a first call response message sent by second UE, where the first call response message includes an identifier of the second UE, and the first call response message is sent to the first UE by the second UE according to the called party identifier included in the received call establishment message; and
establishing, by the first UE according to the received first call response message, a call connection to the second UE corresponding to the identifier of the second UE.

With reference to the first aspect, in a first possible implementation manner, the method further includes:
receiving, by the first UE, a second call response message sent by the second UE, where the second call response message includes an identifier of third UE, the second call response message is sent to the second UE by the third UE, the second call response message is used to represent that the third UE determines to establish a call connection to the first UE by means of the second UE, and the third UE is the UE indicated by the called party identifier or UE included in the group indicated by the called party identifier.

With reference to the first possible implementation manner of the first aspect, in a second possible implementation manner, the first call response message further includes the identifier of the first UE; and
the second call response message is sent to the second UE by the third UE when the third UE receives the first call response message broadcast by the second UE, determines, according to the identifier of the first UE included in the first call response message, to establish the call connection to the first UE corresponding to the identifier of the first UE, sends a relay connection request to the second UE, and establishes a relay connection to the second UE.

With reference to the first aspect, or with reference to the first possible implementation manner of the first aspect, or with reference to the second possible implementation manner of the first aspect, in a third possible implementation manner, before the broadcasting, by first user equipment UE, a call establishment message, the method further includes:
broadcasting, by the first UE, a notification message, where the notification message includes the called party identifier and a cause value, and the cause value is used to represent that the UE indicated by the called party identifier or UE included in the group indicated by the called party identifier is a paging object of the first UE; and
receiving, by the first UE, a notification response message sent by the second UE, where the notification response message includes the identifier of the second UE, and the notification response message is sent by the second UE according to the cause value and the called party identifier that are included in the notification message, where
the call establishment message further includes the identifier of the second UE sending the notification response message.

With reference to the first aspect, or with reference to the first possible implementation manner of the first aspect, or with reference to the second possible implementation manner of the first aspect, or with reference to the third possible implementation manner of the first aspect, in a fourth possible implementation manner, the receiving, by the first UE, a first call response message sent by second UE includes:
receiving, by the first UE, a 200 ok message sent by the second UE, where a layer 2 destination address in the 200 ok message is a layer 2 address of the group.

According to a second aspect, a call establishment method is provided, including:
receiving, by second user equipment UE, a call establishment message broadcast by first UE, where the call establishment message includes an identifier of the first UE and a called party identifier, and the called party identifier is used to indicate a group or UE called by the first UE;
determining, by the second UE according to the called party identifier included in the call establishment message, that the second UE is the UE indicated by the called party identifier or UE included in the group indicated by the called party identifier; and
sending, by the second UE, a first call response message to the first UE, where the first call response message includes an identifier of the second UE.

With reference to the second aspect, in a first possible implementation manner, before the receiving, by second UE, a call establishment message broadcast by first UE, the method further includes:
receiving, by the second UE, a notification message sent by the first UE, where the notification message includes the called party identifier and a cause value, and the cause value is used to represent that the UE indicated by the called party identifier or UE included in the group indicated by the called party identifier is a paging object of the first UE;
determining, by the second UE according to the called party identifier included in the received notification message, that the second UE is the UE indicated by the called party identifier or the second UE is UE included in the group indicated by the called party identifier, and determining, according to the cause value included in the received notification message, that the second UE is a paging object of the first UE; and
sending, by the second UE, a notification response message to the first UE, where the notification response message includes the identifier of the second UE.

According to a third aspect, a call establishment method is provided, including:
receiving, by third user equipment UE, a first call response message broadcast by second UE, where the first call response message includes an identifier of the second UE and an identifier of first UE, and the identifier of the first UE is obtained by the second UE from a received call establishment message broadcast by the first UE;
determining, by the third UE according to the identifier of the first UE included in the received first call response message, to establish a call connection to the first UE corresponding to the identifier of the first UE, and sending a relay connection request to the second UE; and
establishing, by the third UE, a relay connection to the second UE, and sending a second call response message to the second UE, where the second call response message includes an identifier of the third UE.

With reference to the third aspect, in a first possible implementation manner, if the third UE receives two or more first call response messages broadcast by second UEs, the method further includes:
selecting, by the third UE, one first call response message from the two or more first call response messages; and
the determining, by the third UE according to the identifier of the first UE included in the received first call response message, to establish a call connection to the first UE corresponding to the identifier of the first UE, and sending a relay connection request to the second UE includes:
   determining, by the third UE according to the identifier of the first UE included in the selected first call response message, to establish the call connection to the first UE corresponding to the identifier of the first UE, and sending, according to the identifier of the second UE included in the selected first call response message, the relay connection request to the second UE corresponding to the identifier of the second UE.

According to a fourth aspect, user equipment is provided, where the user equipment is first user equipment UE, and includes:
a signal transmitter, configured to broadcast a call establishment message, where the call establishment message includes an identifier of the first UE and a called party identifier, and the called party identifier is used to indicate a group or UE called by the first UE;
a signal receiver, configured to receive a first call response message sent by second UE, where the first call response message includes an identifier of the second UE, and the first call response message is sent to the first UE by the second UE according to the called party identifier included in the received call establishment message; and
a processor, configured to establish, according to the received first call response message, a call connection to the second UE corresponding to the identifier of the second UE.

With reference to the fourth aspect, in a first possible implementation manner, the signal receiver is further configured to receive a second call response message sent by the second UE, where the second call response message includes an identifier of third UE, the second call response message is sent to the second UE by the third UE, the second call response message is used to represent that the third UE determines to establish a call connection to the first UE by means of the second UE, and the third UE is the UE indicated by the called party identifier or UE included in the group indicated by the called party identifier.

With reference to the first possible implementation manner of the fourth aspect, in a second possible implementation manner, the first call response message further includes the identifier of the first UE; and
the second call response message is sent to the second UE by the third UE when the third UE receives the first call response message broadcast by the second UE, determines, according to the identifier of the first UE included in the first call response message, to establish the call connection to the first UE corresponding to the identifier of the first UE, sends a relay connection request to the second UE, and establishes a relay connection to the second UE.

With reference to the fourth aspect, or with reference to the first possible implementation manner of the fourth aspect, or with reference to the second possible implementation manner of the fourth aspect, in a third possible implementation manner, the signal transmitter is further configured to broadcast a notification message before broadcasting the call establishment message, where the notification message includes the called party identifier and a cause value, and the cause value is used to represent that the UE indicated by the called party identifier or UE included in the group indicated by the called party identifier is a paging object of the first UE;
the signal receiver is further configured to receive a notification response message sent by the second UE, where the notification response message includes the identifier of the second UE, and the notification response message is sent by the second UE according to the cause value and the called party identifier that are included in the notification message, where
the call establishment message further includes the identifier of the second UE sending the notification response message.

With reference to the fourth aspect, or with reference to the first possible implementation manner of the fourth aspect, or with reference to the second possible implementation manner of the fourth aspect, or with reference to the third possible implementation manner of the fourth aspect, in a fourth possible implementation manner, the signal receiver is specifically configured to receive a 200 ok message sent by the second UE, where a layer 2 destination address in the 200 ok message is a layer 2 address of the group.

According to a fifth aspect, user equipment is provided, where the user equipment is second user equipment UE, and includes:
a signal receiver, configured to receive a call establishment message broadcast by first UE, where the call establishment message includes an identifier of the first UE and a called party identifier, and the called party identifier is used to indicate a group or UE called by the first UE;
a processor, configured to determine, according to the called party identifier included in the call establishment message, that the second UE is the UE indicated by the called party identifier or UE included in the group indicated by the called party identifier; and
a signal transmitter, configured to send a first call response message to the first UE, where the first call response message includes an identifier of the second UE.

With reference to the fifth aspect, in a first possible implementation manner, the signal transmitter is further configured to: before receiving the call establishment message broadcast by the first UE, receive a notification message sent by the first UE, where the notification message includes the called party identifier and a cause value, and the cause value is used to represent that the UE indicated by the called party identifier or UE included in the group indicated by the called party identifier is a paging object of the first UE;
the processor is further configured to: determine, according to the called party identifier included in the received notification message, that the second UE is the UE indicated by the called party identifier or the second UE is UE included in the group indicated by the called party identifier, and determine, according to the cause value included in the received notification message, that the second UE is a paging object of the first UE; and
the signal transmitter is further configured to send a notification response message to the first UE, where the notification response message includes the identifier of the second UE.

According to a sixth aspect, user equipment is provided, where the user equipment is third user equipment UE, and includes:
a signal receiver, configured to receive a first call response message broadcast by second UE, where the first call response message includes an identifier of the second UE and an identifier of first UE, and the identifier of the first UE is obtained by the second UE from a received call establishment message broadcast by the first UE;
a processor, configured to determine, according to the identifier of the first UE included in the received first call response message, to establish a call connection to the first UE corresponding to the identifier of the first UE; and
a signal transmitter, configured to send a relay connection request to the second UE, where
the processor is further configured to establish a relay connection to the second UE, and
the signal transmitter is further configured to send a second call response message to the second UE, where the second call response message includes an identifier of the third UE.

With reference to the sixth aspect, in a first possible implementation manner, the processor is further configured to: if the signal receiver receives two or more first call response messages broadcast by second UEs, select one first call response message from the two or more first call response messages; and
the determining, by the processor according to the identifier of the first UE included in the received first call response message, to establish a call connection to the first UE corresponding to the identifier of the first UE and the sending a relay connection request to the second UE include:
determining, according to the identifier of the first UE included in the selected first call response message, to establish the call connection to the first UE corresponding to the identifier of the first UE, and sending, according to the identifier of the second UE included in the selected first call response message, the relay connection request to the second UE corresponding to the identifier of the second UE.

According to a seventh aspect, a call establishment system is provided, where the call establishment system includes first user equipment UE and second UE, where
the first UE is configured to: broadcast a call establishment message, where the call establishment message includes an identifier of the first UE and a called party identifier, and the called party identifier is used to indicate a group or UE called by the first UE; receive a first call response message sent by the second UE, where the first call response message includes an identifier of the second UE; and establish, according to the received first call response message, a call connection to the second UE corresponding to the identifier of the second UE; and
the second UE is configured to: receive the call establishment message broadcast by the first UE; determine, according to the called party identifier included in the call establishment message, that the second UE is the UE indicated by the called party identifier or UE included in the group indicated by the called party identifier; and send the first call response message to the first UE.

With reference to the seventh aspect, in a first possible implementation manner, the call establishment system further includes third UE, and
the second UE is specifically configured to broadcast the first call response message when determining that the second UE is the UE indicated by the called party identifier or UE included in the group indicated by the called party identifier;
the third UE is configured to: receive the first call response message broadcast by the second UE, where the first call response message includes the identifier of the second UE and the identifier of the first UE, and the identifier of the first UE is obtained by the second UE from the received call establishment message broadcast by the first UE; and determine, according to the identifier of the first UE included in the received first call response message, to establish a call connection to the first UE corresponding to the identifier of the first UE, and send a relay connection request to the second UE;
the second UE is further configured to: receive the relay connection request sent by the third UE, and send a connection response message to the third UE; and
the third UE is further configured to: establish a relay connection to the second UE according to the received connection response message, and send a second call response message to the second UE, where the second call response message includes an identifier of the third UE.

With reference to the seventh aspect, or with reference to the first possible implementation manner of the seventh aspect, in a third possible implementation manner, the first UE is further configured to broadcast a notification message before broadcasting the call establishment message, where the notification message includes the called party identifier and a cause value, and the cause value is used to represent that the UE indicated by the called party identifier or UE included in the group indicated by the called party identifier is a paging object of the first UE;
the second UE is further configured to: receive the notification message broadcast by the first UE; determine, according to the called party identifier included in the received notification message, that the second UE is the UE indicated by the called party identifier or the second UE is UE included in the group indicated by the called party identifier, and determine, according to the cause value included in the received notification message, that the second UE is a paging object of the first UE; and send a notification response message to the first UE, where the notification response message includes the identifier of the second UE; and
the first UE is further configured to receive the notification response message sent by the second UE.

### Beneficial Effects:

In the embodiments of the present invention, first UE broadcasts a call establishment message, where the call establishment message includes an identifier of the first UE and a called party identifier, and the called party identifier is used to indicate a group or UE called by the first UE; receives a first call response message sent by second UE, where the first call response message includes an identifier of the second UE, and the first call response message is sent to the first UE by the second UE according to the called party identifier included in the received call establishment message; and establishes, according to the received first call response message, a call connection to the second UE corresponding to the identifier of the second UE. In this way, any UE broadcasts a call establishment message in an offline state, and establishes, in a point-to-point manner, a call connection to another UE sending a call response. Therefore, this effectively improves a fixed call establishment manner in a DMO scenario, and improves flexibility of group call establishment in an offline case.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a call establishment method according to the present invention;
FIG. 2 is a schematic flowchart of a call establishment method according to the present invention;
FIG. 3 is a schematic flowchart of a call establishment method according to the present invention;
FIG. 4 is a schematic flowchart of a call establishment method according to the present invention;
FIG. 5 is a schematic structural diagram of user equipment according to the present invention;
FIG. 6 is a schematic structural diagram of user equipment according to the present invention;
FIG. 7 is a schematic structural diagram of user equipment according to the present invention;
FIG. 8 is a schematic structural diagram of user equipment according to the present invention; and
FIG. 9 is a schematic structural diagram of a call establishment system according to the present invention.

### DESCRIPTION OF EMBODIMENTS

To achieve the objective of the present invention, embodiments of the present invention provide a call establishment method and system, and user equipment. First UE broadcasts a call establishment message, where the call establishment message includes an identifier of the first UE and a called party identifier, and the called party identifier is used to indicate a group or UE called by the first UE; receives a first call response message sent by second UE, where the first call response message includes an identifier of the second UE, and the first call response message is sent to the first UE by the second UE according to the called party identifier included in the received call establishment message; and establishes, according to the received first call response message, a call connection to the second UE corresponding to the identifier of the second UE. In this way, any UE broadcasts a call establishment message in an offline state, and establishes, in a point-to-point manner, a call connection to another UE sending a call response. Therefore, this effectively improves a fixed call establishment manner in a DMO scenario, and improves flexibility of group call establishment in an offline case.

It should be noted that, the called party identifier used in the embodiments of the present invention may refer to an identifier of called UE, or may refer to an identifier of a group to which called UE belongs. The identifier of the group may be an identity (English: Identity) of the group, or may refer to an Internet Protocol (English: Internet Protocol; abbreviation: IP) address of the group, or may be other information that can be used to identify the group. This is not limited herein.

The following describes the embodiments of the present invention in detail with reference to accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

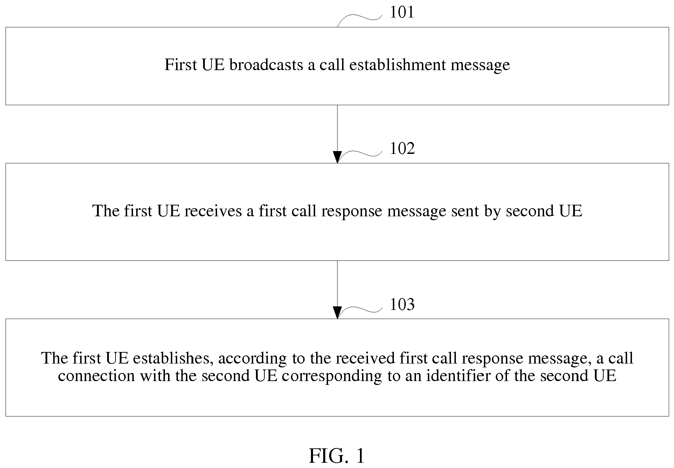

FIG. 1 is a schematic flowchart of a call establishment method provided in an embodiment of the present invention. The method may be described as follows:
Step 101: First UE broadcasts a call establishment message.

The call establishment message includes an identifier of the first UE and a called party identifier, and the called party identifier is used to indicate a group or UE called by the first UE.

Optionally, if an object called by the first UE is a group, the called party identifier included in the call establishment message is an identifier of the group. If the object called by the first UE is UE, the called party identifier included in the call establishment message is an identifier of the UE.

It should be noted that, if the called party identifier is an identifier of UE, the called party identifier may be an identifier of one UE, or may be identifiers of multiple UEs. A quantity of identifiers of UEs is not limited herein.

In step 101, as a call initiator of MCPTT, the first UE may be any UE in a group, and has a function of actively initiating a group call.

First, the first UE determines a target group to which the first UE is to initiate a group call, adds, to the call establishment message, a group identifier of the determined target group as the called party identifier, and sends the call establishment message in a broadcast manner.

Alternatively, the first UE determines to call at least another UE in one group, adds, to the call establishment message, an identifier of the another UE that the first UE determines to call as the called party identifier, and sends the call establishment message in a broadcast manner.

Specifically, when determining to initiate a call, the first UE encapsulates a call request, the identifier of the first UE, the called party identifier, and a protocol message header carrying the call request into an application-layer call establishment message, and sends the call establishment message in a broadcast manner.

Optionally, when determining to initiates a call, the first UE broadcasts Session Initiation Protocol (English: Session Initiation Protocol; abbreviation: SIP) signaling, where the SIP signaling is used to indicate that the first UE initiates a call establishment request, and the SIP signaling includes the identifier of the first UE and the called party identifier.

It should be noted that, the call establishment message may also be specifically implemented by extending a 1:m group (group) communication manner defined in the 3rd Generation Partnership Project (English: 3rd Generation Partnership Project; abbreviation: 3GPP) re112, that is, implemented in a manner of carrying SIP signaling by using the 1:m group (group) communication manner.

Step 102: The first UE receives a first call response message sent by second UE.

The first call response message includes an identifier of the second UE, and the first call response message is sent to the first UE by the second UE according to the called party identifier included in the received call establishment message.

In step 102, there exists at least one second UE near the first UE, and when receiving the call establishment message broadcast by the first UE, the second UE parses the call establishment message to obtain call request signaling and the called party identifier.

The second UE determines, according to the obtained called party identifier, whether the second UE is a call object of the first UE. If the second UE is a call object of the first UE, the second UE determines, according to the call request signaling, whether to accept the call request. When determining to accept a current call, the second UE sends the first call response message to the first UE.

A form of the first call response message may be a 200 ok message. A layer 2 destination address in the 200 ok message may be a layer 2 identifier of the group, or may be a layer 2 identifier of the first UE.

Optionally, the first call response message may also be carried in a 1:m communication (communication) group broadcast message. A layer 2 destination address in the 1:m communication group broadcast message is a layer 2 address of the group. In this way, when obtaining the first call response message, another UE that does not receive a call establishment request broadcast by the first UE knows that the first UE initiates a call and determines whether to accept the call.

Step 103: The first UE establishes, according to the received first call response message, a call connection to the second UE corresponding to the identifier of the second UE.

In step 103, when the first UE receives first call response messages sent by multiple second UEs, the first UE determines, according to each received first call response message, the multiple second UEs that respond to the call. When determining that the multiple second UEs that respond to the current call satisfy a specified call establishment condition, the first UE establishes a call connection to each second UE.

For example, the specified call establishment condition is a quantity of UEs that respond to the current call. In this case, the first UE determines, according to each received first call response message, a quantity of second UEs that respond to the call. When determining that the quantity of the second UEs that respond to the call reaches the set quantity of UEs that is required for call establishment, the first UE establishes the call connection to each second UE.

Specifically, when determining to establish the call connection to each second UE, the first UE sends an application-layer confirmation message to each second UE.

The confirmation message may be an acknowledgment (English: Acknowledgment; abbreviation: ACK) message, or may be another message.

The first UE may send the application-layer confirmation message to each second UE in a point-to-point sending manner.

Optionally, after establishing the call connection to each second UE, in a process of performing a group session, the first UE may also send a session status message to each second UE. The session status message includes an identifier of each second UE that participates in the session, so that each second UE that participates in the session can determine which UEs are to participate in the session and which UEs are to exit the session.

It should be noted that, the session status message may be an SIP Information/Notify message.

The first UE may send the session status message in a broadcast manner, or in a point-to-point sending manner or a point-to-multipoint manner. This is not limited herein.

In this case, as a control role of MCPTT, the first user equipment may perform floor control (English: Floor Control), that is, the first UE receives a session request of each second UE, determines an order in which each second UE speaks, and sends, to the other second UEs in a point-to-point or point-to-multipoint manner, speech or media sent by second UE that is currently speaking.

For example, a group includes UE1, UE2, UE3, and UE4. As a call initiator, the UE1 receives speech or media data sent by the UE2, and separately sends, to the UE3 and the UE4 in a point-to-point or point-to-multipoint manner, the received speech or media data sent by the UE2.

By means of the solution in this embodiment of the present invention, first UE broadcasts a call establishment message, where the call establishment message includes an identifier of the first UE and a called party identifier, and the called party identifier is used to indicate a group or UE called by the first UE; receives a first call response message sent by second UE, where the first call response message includes an identifier of the second UE, and the first call response message is sent to the first UE by the second UE according to the called party identifier included in the received call establishment message; and establishes, according to the received first call response message, a call connection to the second UE corresponding to the identifier of the second UE. In this way, any UE broadcasts a call establishment message in an offline state, and establishes, in a point-to-point manner, a call connection to another UE sending a call response. Therefore, this effectively improves a fixed call establishment manner in a DMO scenario, and improves flexibility of group call establishment in an offline case.

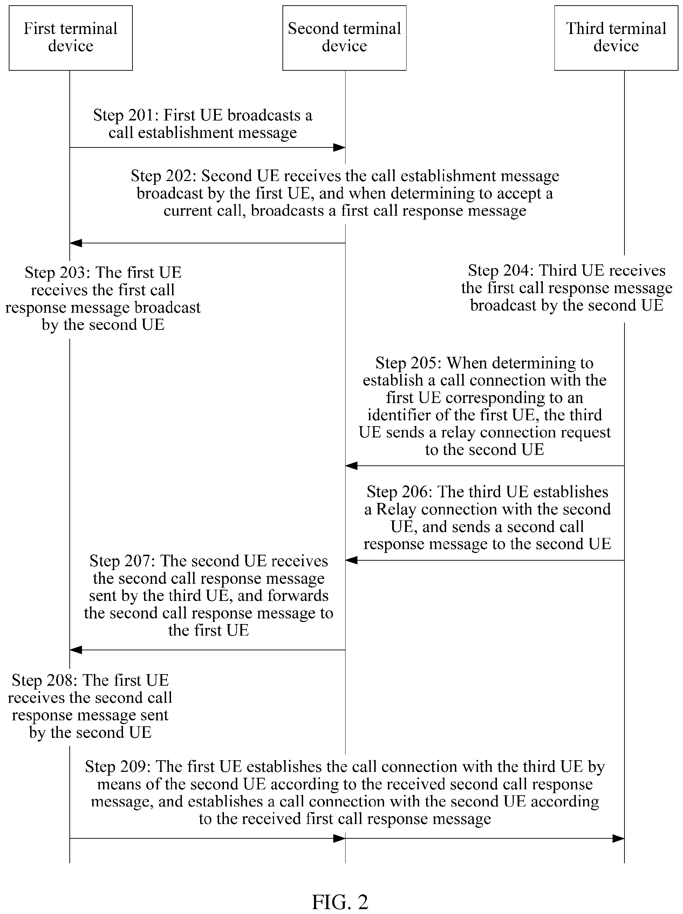

FIG. 2 is a schematic flowchart diagram of a call establishment method provided in an embodiment of the present invention. Based on the embodiment described with reference to FIG. 1, in a solution described in this embodiment of the present invention, when third UE cannot receive a call establishment message broadcast by first UE, the third UE may freely select second UE that can receive the call establishment message broadcast by the first UE, and use the selected second UE as a relay, so as to implement direct mode operation-relay between the third UE and the first UE. The method may be described as follows:
Step 201: First UE broadcasts a call establishment message.

The call establishment message includes an identifier of the first UE and a called party identifier, and the called party identifier is used to indicate a group or UE called by the first UE.

A specific implementation manner of this step is the same as the specific implementation manner of step 101 described above, and is not specifically described herein.

Step 202: Second UE receives the call establishment message broadcast by the first UE, and when determining to accept the call, broadcasts a first call response message.

The first call response message is carried in a 1:m communication (communication) group broadcast message, and a layer 2 destination address in the 1:m communication group broadcast message is a layer 2 address of the group.

In step 202, the second UE determines, according to the called party identifier included in the call establishment message, that the second UE is the UE indicated by the called party identifier or UE included in the group indicated by the called party identifier, and when determining to accept the call, broadcasts the first call response message.

Specifically, the first call response message includes an identifier of the second UE and the identifier of the first UE.

The identifier of the first UE is obtained by the second UE from the call establishment message broadcast by the first UE.

Step 203: The first UE receives the first call response message broadcast by the second UE.

Step 204: Third UE receives the first call response message broadcast by the second UE.

In step 204, the third UE is the UE indicated by the called party identifier or UE included in the group indicated by the called party identifier, and cannot receive the call establishment message broadcast by the first UE, but can receive the first call response message broadcast by the second UE.

Therefore, when receiving the first call response message broadcast by the second UE, the third UE parses the first call response message, to obtain the identifier of the first UE, so as to determine a call initiator.

The third UE determines, according to the identifier of the first UE included in the received first call response message, whether to establish a call connection to the first UE corresponding to the identifier of the first UE.

Optionally, because the second UE sends the first call response message in a broadcast manner, if multiple second UEs all send a first call response message in a broadcast manner, the third UE receives two or more first call response messages. In this case, the third UE selects one first call response message from the two or more received first call response messages.

Herein, the third UE may select the first call response message according to signal strength or signal quality of the received first call response messages. The third UE preferentially selects a first call response message having the strongest signal strength or the best signal quality. A manner of selection is not limited herein.

Specifically, the third UE determines, according to the identifier of the first UE included in the selected first call response message, whether to establish the call connection to the first UE corresponding to the identifier of the first UE.

It should be noted that, the third UE described in this embodiment of the present invention is not limited to one UE, and may be UEs of one type. The UEs of the type are UEs indicated by the called party identifier included in the call establishment message sent by the first UE, but cannot directly receive the call establishment message sent by the first UE.

Step 205: When determining to establish a call connection to the first UE corresponding to the identifier of the first UE, the third UE sends a relay connection request to the second UE.

The relay connection request includes an identifier of the third UE.

In step 205, if the third UE performs the operation of selecting one first call response message in step 204, in step 205, when determining to establish the call connection to the first UE corresponding to the identifier of the first UE, the third UE sends, according to the identifier of the second UE included in the selected first call response message, the relay connection request to the second UE corresponding to the identifier of the second UE.

Step 206: The third UE establishes a relay connection to the second UE, and sends a second call response message to the second UE.

The second call response message includes the identifier of the third UE.

Optionally, before step 206, the second UE forwards, to the third UE, the received call establishment message broadcast by the first UE.

Step 207: The second UE receives the second call response message sent by the third UE, and forwards the second call response message to the first UE.

Step 208: The first UE receives the second call response message sent by the second UE.

The second call response message includes the identifier of the third UE, the second call response message is sent to the second UE by the third UE, the second call response message is used to represent that the third UE determines to establish a call connection to the first UE by means of the second UE, and the third UE is the UE indicated by the called party identifier or UE included in the group indicated by the called party identifier.

Step 209: The first UE establishes the call connection to the third UE by means of the second UE according to the received second call response message, and establishes a call connection to the second UE according to the received first call response message.

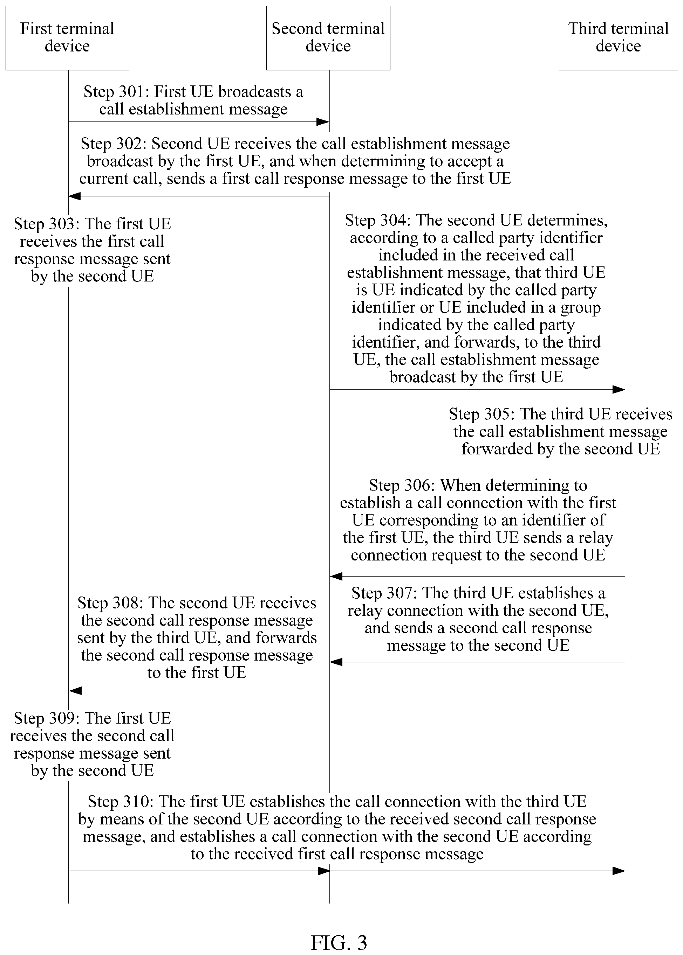

FIG. 3 is a schematic flowchart of a call establishment method provided in an embodiment of the present invention. The call establishment method in this embodiment of the present invention is similar to the call establishment method shown in FIG. 2, but has a different execution process. The method may be described as follows:
Step 301: First UE broadcasts a call establishment message.

The call establishment message includes an identifier of the first UE and a called party identifier, and the called party identifier is used to indicate a group or UE called by the first UE.

A specific implementation manner of this step is the same as the specific implementation manner of step 101 described above, and is not specifically described herein.

Step 302: Second UE receives the call establishment message broadcast by the first UE, and when determining to accept a current call, sends a first call response message to the first UE.

In step 302, the second UE determines, according to the called party identifier included in the call establishment message, that the second UE is the UE indicated by the called party identifier or UE included in the group indicated by the called party identifier, and when determining to accept the call, sends the first call response message to the first UE.

Specifically, the first call response message includes an identifier of the second UE.

Step 303: The first UE receives the first call response message sent by the second UE.

Step 304: The second UE determines, according to the called party identifier included in the received call establishment message, that third UE is the UE indicated by the called party identifier or UE included in the group indicated by the called party identifier, and forwards, to the third UE, the call establishment message broadcast by the first UE.

In step 304, a manner of determining, by the second UE according to the called party identifier included in the received call establishment message, that third UE is the UE indicated by the called party identifier or UE included in the group indicated by the called party identifier includes, but is not limited to:
discovering, by the second UE, the third UE in a discovery manner, and determining that the discovered third UE is the UE indicated by the called party identifier or UE included in the group indicated by the called party identifier; or
determining, by the second UE in a point-to-point manner, that the third UE has not received the call establishment message broadcast by the first UE, and determining that the third UE is the UE indicated by the called party identifier or UE included in the group indicated by the called party identifier.

Step 305: The third UE receives the call establishment message forwarded by the second UE.

In step 305, the third UE is the UE indicated by the called party identifier or UE included in the group indicated by the called party identifier, and cannot receive the call establishment message broadcast by the first UE, but can receive, by means of the second UE, the call establishment message broadcast by the first UE.

In this way, the third UE determines, according to the identifier of the first UE included in the received call establishment message, whether to establish a call connection to the first UE corresponding to the identifier of the first UE.

It should be noted that, the third UE described in this embodiment of the present invention is not limited to one UE, and may be UEs of one type. The UEs of the type are UEs indicated by the called party identifier included in the call establishment message sent by the first UE, but cannot directly receive the call establishment message sent by the first UE.

Step 306: When determining to establish a call connection to the first UE corresponding to the identifier of the first UE, the third UE sends a relay connection request to the second UE.

The relay connection request includes an identifier of the third UE.

Step 307: The third UE establishes a relay connection to the second UE, and sends a second call response message to the second UE.

The second call response message includes the identifier of the third UE.

Step 308: The second UE receives the second call response message sent by the third UE, and forwards the second call response message to the first UE.

Step 309: The first UE receives the second call response message sent by the second UE.

The second call response message includes the identifier of the third UE, the second call response message is sent to the second UE by the third UE, the second call response message is used to represent that the third UE determines to establish the call connection to the first UE by means of the second UE, and the third UE is the UE indicated by the called party identifier or UE included in the group indicated by the called party identifier.

Step 310: The first UE establishes the call connection to the third UE by means of the second UE according to the received second call response message, and establishes a call connection to the second UE according to the received first call response message.

It should be noted that, in the call establishment methods shown in FIG. 2 and FIG. 3, the second UE is used as a relay for call establishment between the first UE and the third UE. In the embodiments of the present invention, there may be one level of relay, or there may be multiple levels of relays. This is not limited herein. For example, a call connection includes UE1, UE2, and UE3, where the UE2 is used as a relay for call establishment between the UE1 and the UE3. A call connection includes UE1, UE2, UE3, and UE4, where the UE2 is used as a relay for call establishment between the UE1 and the UE3, the UE3 is used as a relay for call establishment between the UE2 and the UE4, and the UE2 and the UE3 are used as relays for call establishment between the UE1 and the UE4.

By means of the solution described in this embodiment of the present invention, any UE broadcasts a call establishment message in an offline state, and establishes, in a point-to-point manner, a call connection to another UE sending a call response. If a called object cannot receive the call establishment message of a calling party, the called object may select a called object that is around the called object and that can receive the call establishment message of the calling party, and use the selected called object as a relay for establishing a call connection to the calling party, so as to establish the call connection to the calling party. This effectively improves a fixed call establishment manner in a DMO scenario, and improves flexibility of group call establishment in an offline case.

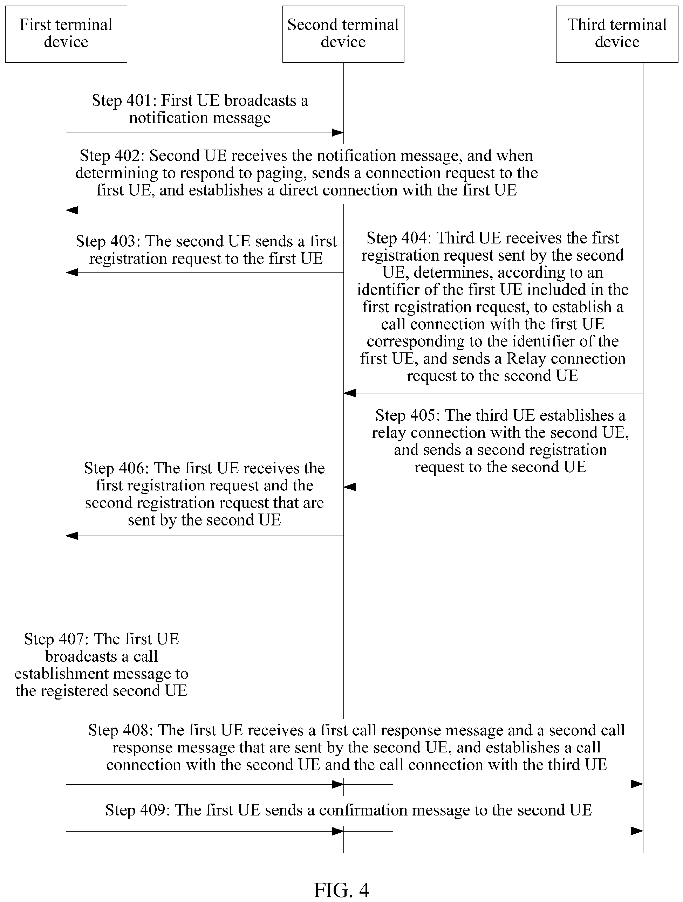

FIG. 4 is a schematic flowchart of a call establishment method provided in an embodiment of the present invention. The method may be described as follows:
Step 401: First UE broadcasts a notification message.

The notification message includes a called party identifier and a cause value, and the cause value is used to represent that UE indicated by the called party identifier or UE included in a group indicated by the called party identifier is a paging object of the first UE.

It should be noted that, the notification message may be sent in a group member discovery (English: group member discovery) manner, or may be sent in a paging (English: Paging) manner. This is not limited herein.

In step 401, before initiating call establishment, the first UE searches for a called object by using the notification message.

For example, a group member that may respond to the call is determined by using a manner of announcing group identifier (English: announcing group ID).

It should be noted that, the notification message may include the group identifier, or may include an identifier of called UE. This is not limited herein.

The notification message may further include an identifier of the first UE, for example, an ID of the first UE and address information of the first UE. The address information is, for example, an IP address.

The notification message includes the cause value, so that when the notification message broadcast by the first UE is received, a purpose of sending the notification message by the first UE is determined, and therefore a response may be made according to the called party identifier included in the received notification message.

Step 402: Second UE receives the notification message, and when determining to respond to paging, sends a connection request to the first UE, and establishes a direct connection (for example, a device-to-device (English: Device to Device; abbreviation: D2D) connection) with the first UE.

In step 402, the second UE is not limited to one UE, and may be UEs of one type, that is, UEs that can directly establish a call connection to the first UE.

Optionally, a manner of determining to respond to the paging by the second UE includes:
determining, by the second UE according to the called party identifier included in the received notification message, that the second UE is the UE indicated by the called party identifier or the second UE is UE included in the group indicated by the called party identifier, determining, according to the cause value included in the received notification message, that the second UE is a paging object of the first UE, and sending a notification response message to the first UE, where
the notification response message includes an identifier of the second UE, and
the first UE receives the notification response message sent by the second user equipment.

Step 403: The second UE sends a first registration request to the first UE.

The first registration request includes the identifier of the second UE.

In step 403, the second UE may send the first registration request in a broadcast manner or a rel12 1:m group broadcast mode.

Optionally, the first registration request includes an identifier of the first UE.

Step 404: Third UE receives the first registration request sent by the second UE, determines, according to the identifier of the first UE included in the first registration request, to establish a call connection to the first UE corresponding to the identifier of the first UE, and sends a relay connection request to the second UE.

The relay connection request includes an identifier of the third user equipment.

Step 405: The third UE establishes a relay connection to the second UE, and sends a second registration request to the second UE.

The second registration request includes the identifier of the third UE.

It should be noted that, step 404 and step 405 in this embodiment of the present invention are not required steps, but are optional steps. An objective of step 404 and step 405 in this embodiment of the present invention is to determine that the second UE is a relay for call establishment between the first UE and the third UE. To achieve this objective, in addition to using the manner in step 404 and step 405 in this embodiment of the present invention, the implementation manner described in step 304 to step 307 in FIG. 3 may also be used. A difference between the two manners lies in that exchanged messages are different.

Step 406: The first UE receives the first registration request and the second registration request that are sent by the second UE.

Step 407: The first UE broadcasts a call establishment message to the registered second UE.

The call establishment message includes the identifier of the first UE and the called party identifier.

In step 407, the first UE may send the call establishment message to the registered second UE in a point-to-point manner, or in a broadcast manner. This is not limited herein.

The call establishment message broadcast by the first UE may be an SIP invite (English: SIP invite) message, where the SIP invite message may include an identifier of called UE, for example, the identifier of the second UE and the identifier of the third UE.

It should be noted herein that, when receiving the SIP invite message, the second UE determines that the third UE is invited to join a session, and in this case, forwards the SIP invite message to the third UE.

Step 408: The first UE receives a first call response message and a second call response message that are sent by the second UE, and establishes the call connections with the second UE and the third UE.

The third UE sends the second call response message to the second UE.

Step 409: The first UE sends a confirmation message to the second UE.

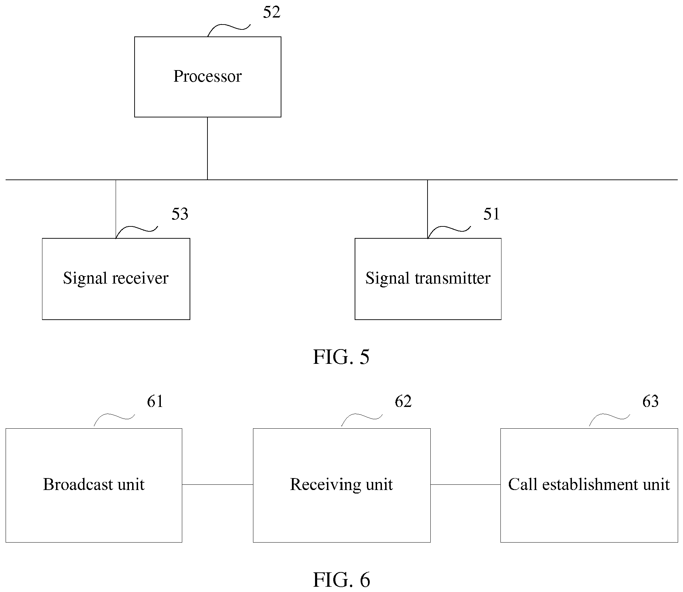

FIG. 5 is a schematic structural diagram of user equipment provided in an embodiment of the present invention. The user equipment may be implemented by using a general-purpose computer structure. The user equipment includes a signal transmitter 51, a processor 52, and a signal receiver 53. The signal transmitter 51, the processor 52, and the signal receiver 53 may be connected by using a bus.

Because user equipments in this embodiment of the present invention have different roles, different functions are used. Functions of the user equipments in this embodiment of the present invention may include three types: a first type is first UE that actively initiates a call; a second type is second UE that can directly establish a call with the first UE; and a third type is third UE that cannot directly establish a call with the first UE but can select the second UE as a relay to establish a call with the first UE.

Specifically, if user equipment is the first UE, the user equipment includes:
a signal transmitter 51, configured to broadcast a call establishment message, where the call establishment message includes an identifier of the first UE and a called party identifier, and the called party identifier is used to indicate a group or UE called by the first UE;
a signal receiver 53, configured to receive a first call response message sent by second UE, where the first call response message includes an identifier of the second UE, and the first call response message is sent to the first UE by the second UE according to the called party identifier included in the received call establishment message; and
a processor 52, configured to establish, according to the received first call response message, a call connection to the second UE corresponding to the identifier of the second UE.

Optionally, the signal receiver 53 is further configured to receive a second call response message sent by the second UE, where the second call response message includes an identifier of third UE, the second call response message is sent to the second UE by the third UE, the second call response message is used to represent that the third UE determines to establish a call connection to the first UE by means of the second UE, and the third UE is the UE indicated by the called party identifier or UE included in the group indicated by the called party identifier.

Specifically, the first call response message further includes the identifier of the first UE; and
the second call response message is sent to the second UE by the third UE when the third UE receives the first call response message broadcast by the second UE, determines, according to the identifier of the first UE included in the first call response message, to establish the call connection to the first UE corresponding to the identifier of the first UE, sends a relay connection request to the second UE, and establishes a relay connection to the second UE.

Optionally, the signal transmitter 51 is further configured to broadcast a notification message before broadcasting the call establishment message, where the notification message includes the called party identifier and a cause value, and the cause value is used to represent that the UE indicated by the called party identifier or UE included in the group indicated by the called party identifier is a paging object of the first UE;
the signal receiver 53 is further configured to receive a notification response message sent by the second UE, where the notification response message includes the identifier of the second UE, and the notification response message is sent by the second UE according to the cause value and the called party identifier that are included in the notification message, where
the call establishment message further includes the identifier of the second UE sending the notification response message.

Specifically, the signal receiver 53 is specifically configured to receive a 200 ok message sent by the second UE, where a layer 2 destination address in the 200 ok message is a layer 2 address of the group.

Specifically, if user equipment is the second UE, the user equipment includes:
a signal receiver 53, configured to receive a call establishment message broadcast by first UE, where the call establishment message includes an identifier of the first UE and a called party identifier, and the called party identifier is used to indicate a group or UE called by the first UE;
a processor 52, configured to determine, according to the called party identifier included in the call establishment message, that the second UE is the UE indicated by the called party identifier or UE included in the group indicated by the called party identifier; and
a signal transmitter 51, configured to send a first call response message to the first UE, where the first call response message includes an identifier of the second UE.

Optionally, the signal transmitter 53 is further configured to: before receiving the call establishment message broadcast by the first UE, receive a notification message sent by the first UE, where the notification message includes the called party identifier and a cause value, and the cause value is used to represent that the UE indicated by the called party identifier or UE included in the group indicated by the called party identifier is a paging object of the first UE;
the processor 52 is further configured to: determine, according to the called party identifier included in the received notification message, that the second UE is the UE indicated by the called party identifier or the second UE is UE included in the group indicated by the called party identifier, and determine, according to the cause value included in the received notification message, that the second UE is a paging object of the first UE; and
the signal transmitter 51 is further configured to send a notification response message to the first UE, where the notification response message includes the identifier of the second UE.

Specifically, if user equipment is the third UE, the user equipment includes:
a signal receiver 53, configured to receive a first call response message broadcast by second UE, where the first call response message includes an identifier of the second UE and an identifier of first UE, and the identifier of the first UE is obtained by the second UE from a received call establishment message broadcast by the first UE;
a processor 52, configured to determine, according to the identifier of the first UE included in the received first call response message, to establish the call connection to the first UE corresponding to the identifier of the first UE; and
a signal transmitter 51, configured to send a relay connection request to the second UE, where
the processor 52 is further configured to establish a relay connection to the second UE, and
the signal transmitter 51 is further configured to send a second call response message to the second UE, where the second call response message includes an identifier of the third UE.

Optionally, the processor 52 is further configured to: if the signal receiver receives two or more first call response messages broadcast by second UEs, select one first call response message from the two or more first call response messages; and
the determining, by the processor 52 according to the identifier of the first UE included in the received first call response message, to establish the call connection to the first UE corresponding to the identifier of the first UE, and the sending a relay connection request to the second UE include:
determining, according to the identifier of the first UE included in the selected first call response message, to establish the call connection to the first UE corresponding to the identifier of the first UE, and sending, according to the identifier of the second UE included in the selected first call response message, the relay connection request to the second UE corresponding to the identifier of the second UE.

The processor 52 may be a general-purpose central processing unit (CPU), a micro-processor, an application-specific integrated circuit (application-specific integrated circuit, ASIC), or one or more integrated circuits used to control execution of a program of a solution of the present invention.

It should be noted that, the user equipments in this embodiment of the present invention may be implemented by using hardware, or may be implemented by using software. This is not limited herein.

Among the functions of the user equipments described in this embodiment of the present invention, functions of a corresponding role are selected when the user equipments are used as different roles, and all the functions are not used at the same time.

FIG. 6 is a schematic structural diagram of user equipment provided in an embodiment of the present invention. The user equipment is the first UE described in the embodiments of the present invention, and includes a broadcast unit 61, a receiving unit 62, and a call establishment unit 63.

The broadcast unit 61 is configured to broadcast a call establishment message, where the call establishment message includes an identifier of the first UE and a called party identifier, and the called party identifier is used to indicate a group or UE called by the first UE.

The receiving unit 62 is configured to receive a first call response message sent by second UE, where the first call response message includes an identifier of the second UE, and the first call response message is sent to the first UE by the second UE according to the called party identifier included in the received call establishment message broadcast by the broadcast unit 61.

The call establishment unit 63 is configured to establish, according to the first call response message received by the receiving unit 62, a call connection to the second UE corresponding to the identifier of the second UE.

Optionally, the receiving unit 62 is further configured to receive a second call response message sent by the second UE, where the second call response message includes an identifier of third UE, the second call response message is sent to the second UE by the third UE, the second call response message is used to represent that the third UE determines to establish a call connection to the first UE by means of the second UE, and the third UE is the UE indicated by the called party identifier or UE included in the group indicated by the called party identifier.

Optionally, the first call response message further includes the identifier of the first UE; and
the second call response message is sent to the second UE by the third UE when the third UE receives the first call response message broadcast by the second UE, determines, according to the identifier of the first UE included in the first call response message, to establish the call connection to the first UE corresponding to the identifier of the first UE, sends a relay connection request to the second UE, and establishes a relay connection to the second UE.

Optionally, the broadcast unit 61 is further configured to broadcast a notification message before broadcasting the call establishment message, where the notification message includes the called party identifier and a cause value, and the cause value is used to represent that the UE indicated by the called party identifier or UE included in the group indicated by the called party identifier is a paging object of the first UE;
the receiving unit 62 is further configured to receive a notification response message sent by the second UE, where the notification response message includes the identifier of the second UE, and the notification response message is sent by the second UE according to the cause value and the called party identifier that are included in the notification message, where
the call establishment message further includes the identifier of the second UE sending the notification response message.

Specifically, the receiving unit 62 is specifically configured to receive a 200 ok message sent by the second UE, where a layer 2 destination address in the 200 ok message is a layer 2 address of the group.

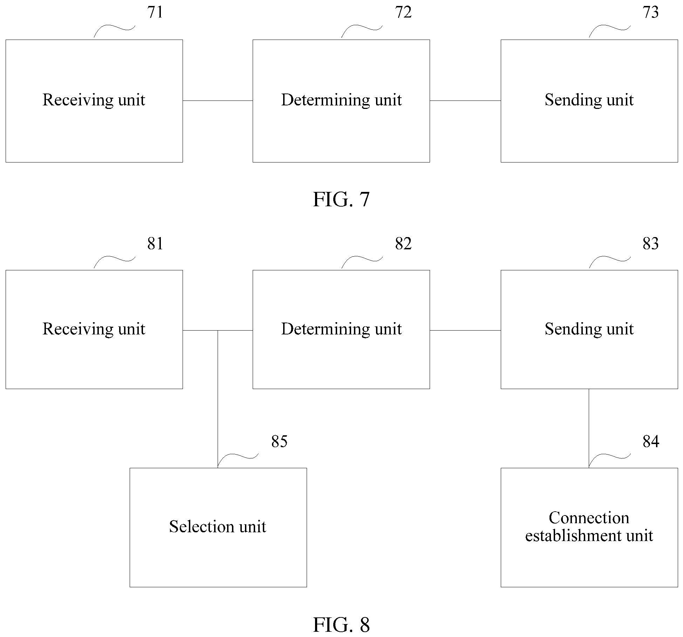

FIG. 7 is a schematic structural diagram of user equipment provided in an embodiment of the present invention. The user equipment is the second user equipment UE, and includes a receiving unit 71, a determining unit 72, and a sending unit 73.

The receiving unit 71 is configured to receive a call establishment message broadcast by first UE, where the call establishment message includes an identifier of the first UE and a called party identifier, and the called party identifier is used to indicate a group or UE called by the first UE.

The determining unit 72 is configured to determine, according to the called party identifier included in the call establishment message received by the receiving unit 71, that the second UE is the UE indicated by the called party identifier or UE included in the group indicated by the called party identifier.

The sending unit 73 is configured to send a first call response message to the first UE, where the first call response message includes an identifier of the second UE.

Optionally, the receiving unit 71 is further configured to: before receiving the call establishment message broadcast by the first UE, receive a notification message sent by the first UE, where the notification message includes the called party identifier and a cause value, and the cause value is used to represent that the UE indicated by the called party identifier or UE included in the group indicated by the called party identifier is a paging object of the first UE;
the determining unit 72 is further configured to: determine, according to the called party identifier included in the received notification message, that the second UE is the UE indicated by the called party identifier or the second UE is UE included in the group indicated by the called party identifier, and determine, according to the cause value included in the received notification message, that the second UE is a paging object of the first UE; and
the sending unit 73 is further configured to send a notification response message to the first UE, where the notification response message includes the identifier of the second UE.

FIG. 8 is a schematic structural diagram of user equipment provided in an embodiment of the present invention. The user equipment is the third user equipment UE, and includes a receiving unit 81, a determining unit 82, a sending unit 83, and a connection establishment unit 84.

The receiving unit 81 is configured to receive a first call response message broadcast by second UE, where the first call response message includes an identifier of the second UE and an identifier of first UE, and the identifier of the first UE is obtained by the second UE from a received call establishment message broadcast by the first UE.

The determining unit 82 is configured to determine, according to the identifier of the first UE included in the received first call response message, to establish a call connection to the first UE corresponding to the identifier of the first UE.

The sending unit 83 is configured to send a relay connection request to the second UE.

The connection establishment unit 84 is configured to connect a relay connection to the second UE.

The sending unit 83 is further configured to send a second call response message to the second UE, where the second call response message includes an identifier of the third UE.

Optionally, the user equipment further includes a selection unit 85, where
the selection unit 85 is further configured to: if the signal receiver receives two or more first call response messages broadcast by second UEs, select one first call response message from the two or more first call response messages;
the determining unit 82 is specifically configured to determine, according to the identifier of the first UE included in the selected first call response message, to establish the call connection to the first UE corresponding to the identifier of the first UE; and
the sending unit 83 is specifically configured to send, according to the identifier of the second UE included in the selected first call response message, the relay connection request to the second UE corresponding to the identifier of the second UE.

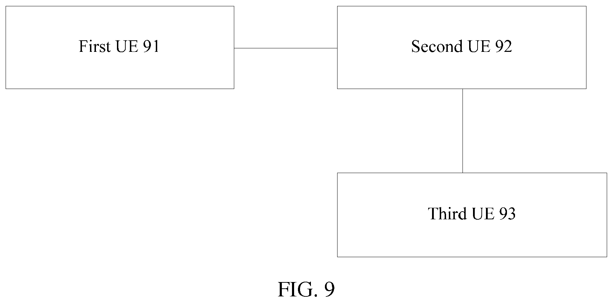

FIG. 9 is a schematic structural diagram of a call establishment system provided in an embodiment of the present invention. The call establishment system includes first user equipment UE 91 and second UE 92, where
the first UE 91 is configured to: broadcast a call establishment message, where the call establishment message includes an identifier of the first UE and a called party identifier, and the called party identifier is used to indicate a group or UE called by the first UE; receive a first call response message sent by the second UE, where the first call response message includes an identifier of the second UE; and establish, according to the received first call response message, a call connection to the second UE corresponding to the identifier of the second UE; and
the second UE 92 is configured to: receive the call establishment message broadcast by the first UE; determine, according to the called party identifier included in the call establishment message, that the second UE is the UE indicated by the called party identifier or UE included in the group indicated by the called party identifier; and send the first call response message to the first UE.

Optionally, the call establishment system further includes third UE 93, where
the second UE 92 is specifically configured to broadcast the first call response message when determining that the second UE is the UE indicated by the called party identifier or UE included in the group indicated by the called party identifier;
the third UE 93 is configured to: receive the first call response message broadcast by the second UE, where the first call response message includes the identifier of the second UE and the identifier of the first UE, and the identifier of the first UE is obtained by the second UE from the received call establishment message broadcast by the first UE; and determine, according to the identifier of the first UE included in the received first call response message, to establish a call connection to the first UE corresponding to the identifier of the first UE, and send a relay connection request to the second UE;
the second UE 92 is further configured to: receive the relay connection request sent by the third UE, and send a connection response message to the third UE; and
the third UE 93 is further configured to: establish a relay connection to the second UE according to the received connection response message, and send a second call response message to the second UE, where the second call response message includes an identifier of the third UE.

Optionally, the first UE 91 is further configured to broadcast a notification message before broadcasting the call establishment message, where the notification message includes the called party identifier and a cause value, and the cause value is used to represent that the UE indicated by the called party identifier or UE included in the group indicated by the called party identifier is a paging object of the first UE;
the second UE 92 is further configured to: receive the notification message broadcast by the first UE; determine, according to the called party identifier included in the received notification message, that the second UE is the UE indicated by the called party identifier or the second UE is UE included in the group indicated by the called party identifier, and determine, according to the cause value included in the received notification message, that the second UE is a paging object of the first UE; and send a notification response message to the first UE, where the notification response message includes the identifier of the second UE; and
the first UE 91 is further configured to receive the notification response message sent by the second UE.

A person skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A call establishment method, comprising:
broadcasting, by first user equipment UE, a call establishment message, wherein the call establishment message comprises an identifier of the first UE and a called party identifier, and the called party identifier is used to indicate a group or UE called by the first UE;
receiving, by the first UE, a first call response message sent by second UE, wherein the first call response message comprises an identifier of the second UE, and the first call response message is sent to the first UE by the second UE according to the called party identifier comprised in the received call establishment message; and
establishing, by the first UE according to the received first call response message, a call connection to the second UE corresponding to the identifier of the second UE.

2. The call establishment method according to claim 1, wherein the method further comprises:
receiving, by the first UE, a second call response message sent by the second UE, wherein the second call response message comprises an identifier of third UE, the second call response message is sent to the second UE by the third UE, the second call response message is used to represent that the third UE determines to establish a call connection to the first UE by means of the second UE, and the third UE is the UE indicated by the called party identifier or UE comprised in the group indicated by the called party identifier.

3. The call method according to claim 2, wherein the first call response message further comprises the identifier of the first UE; and
the second call response message is sent to the second UE by the third UE when the third UE receives the first call response message broadcast by the second UE, determines, according to the identifier of the first UE comprised in the first call response message, to establish the call connection to the first UE corresponding to the identifier of the first UE, sends a relay connection request to the second UE, and establishes a relay connection to the second UE.

4. The call establishment method according to any one of claims 1 to 3, wherein before the broadcasting, by first user equipment UE, a call establishment message, the method further comprises:
broadcasting, by the first UE, a notification message, wherein the notification message comprises the called party identifier and a cause value, and the cause value is used to represent that the UE indicated by the called party identifier or UE comprised in the group indicated by the called party identifier is a paging object of the first UE; and
receiving, by the first UE, a notification response message sent by the second UE, wherein the notification response message comprises the identifier of the second UE, and the notification response message is sent by the second UE according to the cause value and the called party identifier that are comprised in the notification message, wherein
the call establishment message further comprises the identifier of the second UE sending the notification response message.

5. The call establishment method according to any one of claims 1 to 4, wherein the receiving, by the first UE, a first call response message sent by second UE comprises:
receiving, by the first UE, a 200 ok message sent by the second UE, wherein a layer 2 destination address in the 200 ok message is a layer 2 address of the group.

6. A call establishment method, comprising:
receiving, by second user equipment UE, a call establishment message broadcast by first UE, wherein the call establishment message comprises an identifier of the first UE and a called party identifier, and the called party identifier is used to indicate a group or UE called by the first UE;
determining, by the second UE according to the called party identifier comprised in the call establishment message, that the second UE is the UE indicated by the called party identifier or UE comprised in the group indicated by the called party identifier; and
sending, by the second UE, a first call response message to the first UE, wherein the first call response message comprises an identifier of the second UE.

7. The call establishment method according to claim 6, wherein before the receiving, by second UE, a call establishment message broadcast by first UE, the method further comprises:
receiving, by the second UE, a notification message sent by the first UE, wherein the notification message comprises the called party identifier and a cause value, and the cause value is used to represent that the UE indicated by the called party identifier or UE comprised in the group indicated by the called party identifier is a paging object of the first UE;
determining, by the second UE according to the called party identifier comprised in the received notification message, that the second UE is the UE indicated by the called party identifier or the second UE is UE comprised in the group indicated by the called party identifier, and determining, according to the cause value comprised in the received notification message, that the second UE is a paging object of the first UE; and
sending, by the second UE, a notification response message to the first UE, wherein the notification response message comprises the identifier of the second UE.

8. A call establishment method, comprising:
receiving, by third user equipment UE, a first call response message broadcast by second UE, wherein the first call response message comprises an identifier of the second UE and an identifier of first UE, and the identifier of the first UE is obtained by the second UE from a received call establishment message broadcast by the first UE;
determining, by the third UE according to the identifier of the first UE comprised in the received first call response message, to establish a call connection to the first UE corresponding to the identifier of the first UE, and sending a relay connection request to the second UE; and
establishing, by the third UE, a relay connection to the second UE, and sending a second call response message to the second UE, wherein the second call response message comprises an identifier of the third UE.

9. The call establishment method according to claim 8, wherein if the third UE receives two or more first call response messages broadcast by second UEs, the method further comprises:
selecting, by the third UE, one first call response message from the two or more first call response messages; and
the determining, by the third UE according to the identifier of the first UE comprised in the received first call response message, to establish a call connection to the first UE corresponding to the identifier of the first UE, and sending a relay connection request to the second UE comprises:
determining, by the third UE according to the identifier of the first UE comprised in the selected first call response message, to establish the call connection to the first UE corresponding to the identifier of the first UE, and sending, according to the identifier of the second UE comprised in the selected first call response message, the relay connection request to the second UE corresponding to the identifier of the second UE.

10. User equipment, wherein the user equipment is first user equipment UE, and comprises:
a signal transmitter, configured to broadcast a call establishment message, wherein the call establishment message comprises an identifier of the first UE and a called party identifier, and the called party identifier is used to indicate a group or UE called by the first UE;
a signal receiver, configured to receive a first call response message sent by second UE, wherein the first call response message comprises an identifier of the second UE, and the first call response message is sent to the first UE by the second UE according to the called party identifier comprised in the received call establishment message; and
a processor, configured to establish, according to the received first call response message, a call connection to the second UE corresponding to the identifier of the second UE.

11. The user equipment according to claim 10, wherein
the signal receiver is further configured to receive a second call response message sent by the second UE, wherein the second call response message comprises an identifier of third UE, the second call response message is sent to the second UE by the third UE, the second call response message is used to represent that the third UE determines to establish a call connection to the first UE by means of the second UE, and the third UE is the UE indicated by the called party identifier or UE comprised in the group indicated by the called party identifier.

12. The user equipment according to claim 11, wherein the first call response message further comprises the identifier of the first UE; and
the second call response message is sent to the second UE by the third UE when the third UE receives the first call response message broadcast by the second UE, determines, according to the identifier of the first UE comprised in the first call response message, to establish the call connection to the first UE corresponding to the identifier of the first UE, sends a relay connection request to the second UE, and establishes a relay connection to the second UE.

13. The user equipment according to any one of claims 10 to 12, wherein
the signal transmitter is further configured to broadcast a notification message before broadcasting the call establishment message, wherein the notification message comprises the called party identifier and a cause value, and the cause value is used to represent that the UE indicated by the called party identifier or UE comprised in the group indicated by the called party identifier is a paging object of the first UE;
the signal receiver is further configured to receive a notification response message sent by the second UE, wherein the notification response message comprises the identifier of the second UE, and the notification response message is sent by the second UE according to the cause value and the called party identifier that are comprised in the notification message, wherein
the call establishment message further comprises the identifier of the second UE sending the notification response message.

14. The user equipment according to any one of claims 10 to 13, wherein
the signal receiver is specifically configured to receive a 200 ok message sent by the second UE, wherein a layer 2 destination address in the 200 ok message is a layer 2 address of the group.

15. User equipment, wherein the user equipment is second user equipment UE, and comprises:
a signal receiver, configured to receive a call establishment message broadcast by first UE, wherein the call establishment message comprises an identifier of the first UE and a called party identifier, and the called party identifier is used to indicate a group or UE called by the first UE;
a processor, configured to determine, according to the called party identifier comprised in the call establishment message, that the second UE is the UE indicated by the called party identifier or UE comprised in the group indicated by the called party identifier; and
a signal transmitter, configured to send a first call response message to the first UE, wherein the first call response message comprises an identifier of the second UE.

16. The user equipment according to claim 15, wherein
the signal transmitter is further configured to: before receiving the call establishment message broadcast by the first UE, receive a notification message sent by the first UE, wherein the notification message comprises the called party identifier and a cause value, and the cause value is used to represent that the UE indicated by the called party identifier or UE comprised in the group indicated by the called party identifier is a paging object of the first UE;
the processor is further configured to: determine, according to the called party identifier comprised in the received notification message, that the second UE is the UE indicated by the called party identifier or the second UE is UE comprised in the group indicated by the called party identifier, and determine, according to the cause value comprised in the received notification message, that the second UE is a paging object of the first UE; and
the signal transmitter is further configured to send a notification response message to the first UE, wherein the notification response message comprises the identifier of the second UE.

17. User equipment, wherein the user equipment is third user equipment UE, and comprises:
a signal receiver, configured to receive a first call response message broadcast by second UE, wherein the first call response message comprises an identifier of the second UE and an identifier of first UE, and the identifier of the first UE is obtained by the second UE from a received call establishment message broadcast by the first UE;
a processor, configured to determine, according to the identifier of the first UE comprised in the received first call response message, to establish a call connection to the first UE corresponding to the identifier of the first UE; and
a signal transmitter, configured to send a relay connection request to the second UE, wherein
the processor is further configured to establish a relay connection to the second UE, and
the signal transmitter is further configured to send a second call response message to the second UE, wherein the second call response message comprises an identifier of the third UE.

18. The user equipment according to claim 17, wherein
the processor is further configured to: if the signal receiver receives two or more first call response messages broadcast by second UEs, select one first call response message from the two or more first call response messages; and
the determining, by the processor according to the identifier of the first UE comprised in the received first call response message, to establish a call connection to the first UE corresponding to the identifier of the first UE, and the sending a relay connection request to the second UE comprise:
determining, according to the identifier of the first UE comprised in the selected first call response message, to establish the call connection to the first UE corresponding to the identifier of the first UE, and sending, according to the identifier of the second UE comprised in the selected first call response message, the relay connection request to the second UE corresponding to the identifier of the second UE.

19. A call establishment system, wherein the call establishment system comprises first user equipment UE and second UE, wherein
the first UE is configured to: broadcast a call establishment message, wherein the call establishment message comprises an identifier of the first UE and a called party identifier, and the called party identifier is used to indicate a group or UE called by the first UE; receive a first call response message sent by the second UE, wherein the first call response message comprises an identifier of the second UE; and establish, according to the received first call response message, a call connection to the second UE corresponding to the identifier of the second UE; and
the second UE is configured to: receive the call establishment message broadcast by the first UE; determine, according to the called party identifier comprised in the call establishment message, that the second UE is the UE indicated by the called party identifier or UE comprised in the group indicated by the called party identifier; and send the first call response message to the first UE.

20. The call establishment system according to claim 19, wherein the call establishment system further comprises third UE, and
the second UE is specifically configured to broadcast the first call response message when determining that the second UE is the UE indicated by the called party identifier or UE comprised in the group indicated by the called party identifier;
the third UE is configured to: receive the first call response message broadcast by the second UE, wherein the first call response message comprises the identifier of the second UE and the identifier of the first UE, and the identifier of the first UE is obtained by the second UE from the received call establishment message broadcast by the first UE; and determine, according to the identifier of the first UE comprised in the received first call response message, to establish a call connection to the first UE corresponding to the identifier of the first UE, and send a relay connection request to the second UE;
the second UE is further configured to: receive the relay connection request sent by the third UE, and send a connection response message to the third UE; and
the third UE is further configured to: establish a relay connection to the second UE according to the received connection response message, and send a second call response message to the second UE, wherein the second call response message comprises an identifier of the third UE.

21. The call establishment system according to claim 19 or 20, wherein
the first UE is further configured to broadcast a notification message before broadcasting the call establishment message, wherein the notification message comprises the called party identifier and a cause value, and the cause value is used to represent that the UE indicated by the called party identifier or UE comprised in the group indicated by the called party identifier is a paging object of the first UE;
the second UE is further configured to: receive the notification message broadcast by the first UE; determine, according to the called party identifier comprised in the received notification message, that the second UE is the UE indicated by the called party identifier or the second UE is UE comprised in the group indicated by the called party identifier, and determine, according to the cause value comprised in the received notification message, that the second UE is a paging object of the first UE; and send a notification response message to the first UE, wherein the notification response message comprises the identifier of the second UE; and
the first UE is further configured to receive the notification response message sent by the second UE.
